# EUROPÄISCHE PATENTSCHRIFT

(11) **EP 0 818 629 B1**
(45) Veröffentlichungstag und Bekanntmachung des Hinweises auf die Patenterteilung: **23.10.2002**
(21) Anmeldenummer: 97111275.0
(22) Anmeldetag: 04.07.1997
(51) Int. Cl.: F15B 21/04, F16H 61/30

(54) **Hydraulische Stelleinheit und Verfahren zum Entlüften einer hydraulischen Stelleinheit**
Hydraulic actuator and process for venting a hydraulic actuator
Dispositif de commande hydraulique et procédé de purge d'un dispositif de commande hydraulique

(30) Priorität: 11.07.1996 DE 19627974
(43) Veröffentlichungstag der Anmeldung: 14.01.1998
(73) Patentinhaber: GETRAG Getriebe- und Zahnradfabrik Hermann Hagenmeyer GmbH & Cie KG, 74199 Untergruppenbach (DE); Bayerische Motoren Werke Aktiengesellschaft, 80788 München (DE)
(72) Erfinder: Petrzik,Gunther, 78112 St. Georgen (DE); Hohensee, Hartmut, 85716 Unterschleissheim (DE); Seufert, Martin, 71229 Leonberg (DE)
(74) Vertreter: Witte, Alexander, Dr.-Ing.

(56) Entgegenhaltungen:
- DE-A- 2 341 199
- DE-A- 2 510 392
- DE-A- 4 439 454
- US-A- 4 385 909
- US-A- 4 779 418
- PATENT ABSTRACTS OF JAPAN vol. 005, no. 002 (M-049), 9.Januar 1981 & JP 55 135210 A (HITACHI CONSTR MACH CO LTD), 21.Oktober 1980,

## Beschreibung

Die vorliegende Erfindung betrifft eine hydraulische Stelleinheit mit wenigstens zwei Kammern, die zur Betätigung eines Stellgliedes mit einer aus einem Hydraulikfluidbehälter versorgten Quelle von unter Arbeitsdruck stehendem Hydraulikfluid durch jeweilige Schaltventile verbindbar sind, wobei die Kammern über eine schaltbare Ventilanordnung miteinander verbunden sind, derart, daß bei auf Durchfluß geschalteter Ventilanordnung ein geschlossener Spülkreis ausgehend von dem Hydraulikfluidbehälter über die Hydraulikfluidquelle, die Schaltventile, die Kammern und die Ventilanordnung zurück zu dem Hydraulikfluidbehälter gebildet ist.

Die vorliegende Erfindung betrifft ferner ein Verfahren zum Entlüften einer solchen hydraulischen Stelleinheit, wobei die Kammern zur Entlüftung miteinander verbunden werden und das Hydraulikfluid anschließend von der Hydraulikfluidquelle durch die Kammern zurück in den Hydraulikfluidbehälter gespült wird.

Eine derartige Stelleinheit bzw. ein solches Verfahren sind aus der JP-A-55 135 210 bekannt.

Solche hydraulischen Stelleinheiten sind allgemein bekannt und werden bspw. in Getriebeaktuatoren für Mehrgang-Wechselgetriebe eingesetzt, in denen die hydraulische Stelleinheit regelmäßig ein eine Getriebeschaltwelle in einer ersten Bewegungsrichtung hin- und herbewegendes erstes Stellglied und ein die Getriebeschaltwelle in einer zweiten, generell quer zu ersten Bewegungsrichtung hin- und herbewegendes zweites Stellglied aufweist.

Hydraulische Stelleinheiten weisen regelmäßig Kolben/Zylinderanordnungen auf, wobei der oder die Zylinderinnenräume die Kammern und der Kolben das Stellglied der oben erwähnten hydraulischen Stelleinheit bilden. Wenn unter Arbeitsdruck stehendes Hydraulikfluid in den Zylinderinnenraum geführt wird, wird der Kolben bewegt, wobei diese Bewegung z.B. bei einem Getriebeaktuator in eine Bewegung der Getriebeschaltwelle umgesetzt wird.

Aufgrund z.B. von Undichtigkeiten kann Luft in dieses Hydrauliksystem gelangen. Die Luft verändert aufgrund ihrer Kompressibilität die physikalischen Eigenschaften und damit das Übertragungsverhalten der hydraulischen Stelleinheit. Zum Entfernen der Luft ist es bekannt, bei solchen hydraulischen Stelleinheiten Entlüftungsventile vorzusehen. Solche Entlüftungsventile erzwingen ein Entweichen der dispergierten Luft durch Aufheben der hermetischen Trennung zur Umgebungsluft. Die Entlüftungsventile sind häufig als Schraubventile ausgebildet. Die Luft entweicht durch den Hydraulikfluiddruck. Tritt Hydraulikfluid in ungeperlter Form aus, kann die Stelleinheit als entlüftet gelten und die Ventilbohrung geschlossen werden.

Solche Entlüftungsventile sind meist schwer zugänglich. In der Regel sind zum Entlüften zwei Personen notwendig. Eine Person bedient die hydraulische Stelleinheit, um Hydraulikfluiddruck aufzubauen. Die andere Person bedient das Entlüftungsventil.

Ausgehend von diesem Stand der Technik ist es die Aufgabe der vorliegenden Erfindung, eine hydraulische Stelleinheit anzugeben, die leicht zu entlüften ist.

Diese Aufgabe wird bei der eingangs genannten hydraulischen Stelleinheit dadurch gelöst, daß die schaltbare Ventilanordnung wenigstens ein Druckventil aufweist, dessen Schaltdruck höher ist als der Arbeitsdruck des Hydraulikfluides zur Betätigung des Stellgliedes.

Die Aufgabe wird darüber hinaus bei dem eingangs erwähnten Verfahren zum Entlüften einer hydraulischen Stelleinheit dadurch gelöst, daß die Kammern durch wenigstens ein Druckventil miteinander verbunden sind, dessen Schaltdruck höher ist als der Arbeitsdruck des Hydraulikfluides zur Betätigung des Stellgliedes, und daß der Hydraulikdruck zum Schalten des Druckventils auf den Schaltdruck angehoben wird, um einen Spülvorgang einzuleiten.

Die Aufgabe wird somit vollkommen gelöst.

Generell stellen die Kammern von hydraulischen Stelleinheiten nichtdurchströmte Stränge dar. Durch das Vorsehen einer schaltbaren Ventilanordnung ist es möglich, die stoffliche Trennung der Kammern aufzuheben. Zur Entlüftung wird luftfreies Hydraulikfluid aus dem Hydraulikfluidbehälter in die Kammern gepumpt. Das in diesen enthaltene Hydraulikfluid mit darin dispergierter Luft wird in den Hydraulikfluidbehälter zurückgeführt.

Zur Realisierung dieses offenen Kreises ist gegenüber herkömmlichen hydraulischen Stelleinheiten lediglich eine zusätzliche schaltbare Ventilanordnung erforderlich. Für den Entlüftungsvorgang kann ansonsten auf die bereits vorhandenen Teile wie Hydraulikfluidquelle und Schaltventile zurückgegriffen werden, die ggf. für den Entlüftungsvorgang gesondert anzusteuern sind. Hierzu ist jedoch keine mechanische Arbeit erforderlich, da die in solchen hydraulischen Stelleinheiten verwendeten Ventile und Pumpen in aller Regel elektromagnetisch angesteuert werden.

Die Entlüftung kann mit hoher Funktionssicherheit durchgeführt werden, da keine benutzerabhängigen Arbeiten wie das Ein- und Ausschrauben von Entlüftungsschrauben anfallen. Eine vollständige Entlüftung kann somit immer gewährleistet werden. Da der Benutzer nicht mechanisch eingreifen muß, können keine mechanischen Beschädigungen (z.B. am Entlüftungsventilgewinde) auftreten. Der Entlüftungsvorgang kann "ferngesteuert", also z.B. durch Eingriff in die Elektronik eines mit einer solchen hydraulischen Stelleinheit ausgestatteten Fahrzeugs erfolgen. Der Ausbau von Teilen wird somit vermieden.

Schließlich wird verhindert, daß beim Entlüftungsvorgang Hydraulikfluid aus dem Hydraulikkreis austritt, wie dies bei Entlüftungsventilen der Fall ist. Hydraulikfluidverluste werden somit vermieden. Schließlich gelangt der Benutzer nicht in Kontakt mit dem Hydraulikfluid, so daß keine Schutzkleidung erforderlich ist.

Der Entlüftungsvorgang kann in kürzerer Zeit von einer einzelnen Person durchgeführt werden.

Durch die Maßnahme, daß der Schaltdruck des Druckventils höher ist als der Arbeitsdruck, ist es nicht erforderlich, für die schaltbare Ventilanordnung eine separate elektromagnetische Ansteuerung vorzusehen. Für den Entlüftungsvorgang wird der Fluiddruck auf den Schaltdruck angehoben, so daß das Druckventil auf Durchfluß geschaltet wird.

Dabei ist es bevorzugt, wenn das Druckventil ein Sperrventil ist.

Sperrventile sind besonders kostengünstig und einfach in vorhandene Hydrauliksysteme zu integrieren.

Gemäß einer bevorzugten Ausführungsform umfassen die Kammern zwei Kammern einer doppelt wirkenden Kolben/Zylinderanordnung, wobei die schaltbare Ventilanordnung im Kolben der Kolben/Zylinderanordnung angeordnet ist.

Bei dieser Ausführungsform sind zur Verbindung der zwei Kammern keine separaten Leitungen erforderlich. Die zwei Kammern zu beiden Seiten des Kolbens werden durch die Ventilanordnung im Kolben verbunden. Diese Maßnahme ist natürlich insbesondere dann vorteilhaft, wenn als schaltbare Ventilanordnung ein Druckventil vorgesehen wird, da dessen Schaltvorgänge ohne separate elektromagnetische Steuerung möglich sind.

Gemäß einer weiteren bevorzugten Ausführungsform ist das Druckventil ein druckgesteuertes Wegeventil.

Mit einem Wegeventil können auf konstruktiv einfache Weise mehrere Pfade parallel geschaltet werden. Insbesondere dann, wenn mehrere Kammern zu entlüften sind, ist ein solches druckgesteuertes Wegeventil vorteilhaft.

Es ist weiterhin bevorzugt, wenn die schaltbare Ventilanordnung eine Steueröffnung in einer Kolben/Zylinderanordnung aufweist, wobei die Steueröffnung bei Arbeitsdruck des Hydraulikfluides im Überschneidungsbereich zwischen Kolben und Zylinder der Anordnung angeordnet ist und bei Schaltdruck des Hydraulikfluides mit einer Kammer der Anordnung in Verbindung steht.

Bei dieser Ausführungsform wird auf konstruktiv besonders einfache Weise erreicht, daß die Steueröffnung im normalen Betrieb bei Arbeitsdruck des Hydraulikfluides geschlossen ist. Bei Anlegen eines höheren Schaltdruckes wird der Kolben weiter ausgelenkt, so daß die Steueröffnung freigegeben wird. Diese Ausführungsform ist auch mit einem seriell mit der Steueröffnung verbundenen Druckventil kombinierbar.

Dabei ist es bevorzugt, wenn die Kolben/Zylinderanordnung eine einfach wirkende Kolben/Zylinderanordnung ist.

Mit einer einfach wirkenden Kolben/Zylinderanordnung ist eine schaltbare Ventilanordnung in der Form einer Steueröffnung im Überschneidungsbereich zwischen Kolben und Zylinder besonders unproblematisch zu realisieren. Insbesondere kann die Steueröffnung so angeordnet werden, daß ein unbeabsichtigtes Öffnen auch bei Auftreten von Druckspitzen vermieden wird.

Von besonderem Vorzug ist es, wenn die hydraulische Stelleinheit drei oder mehr Kammern mit jeweiligen, diesen zugeordneten Schaltventilen aufweist, von denen eine zentrale Kammer mit den anderen Kammern über eine jeweilige schaltbare Ventilanordnung so verbunden ist, daß parallele Spülkreise gebildet werden.

Es versteht sich, daß zur Bildung eines offenen Kreises mit z.B. drei Kammern nur zwei schaltbare Ventilanordnungen notwendig sind. Durch die Maßnahme, zwei parallele Spülkreise vorzusehen, kann jeder einzelne Spülkreis kurz gehalten werden.

Die zwei parallelen Spülkreise können dabei entweder gleichzeitig oder aber getrennt voneinander gespült werden.

Dabei ist es bevorzugt, wenn die schaltbaren Ventilanordnungen durch parallele Druckbegrenzungsventile gebildet werden, deren Schaltdruck höher ist als der Arbeitsdruck des Hydraulikfluides zur Betätigung der jeweiligen Stellglieder und wenn zur Entlüftung der zentralen Kammer und einer der anderen Kammern die verbleibenden Kammern parallel zu der zentralen Kammer mit Hydraulikfluid unter Schaltdruck versorgt werden.

Durch diese Maßnahme wird in der jeweils nicht zu entlüftenden Kammer ein Gegendruck aufgebaut, so daß gezielt jeweils nur ein Druckbegrenzungsventil aufgrund des Schaltdruckes auf Durchfluß geschaltet wird. Durch diese Maßnahme können für die zwei Spülkreise identische Druckbegrenzungsventile eingesetzt werden. Denn ein paralleles, also gleichzeitiges Schalten von zwei Druckbegrenzungsventilen ist bei Einhaltung üblicher Fertigungstoleranzen und damit häufig nicht identischen Schaltdrücken nur schwierig zu realisieren.

Alternativerweise ist es bevorzugt, wenn die zentrale Kammer mit den anderen Kammern über ein druckgesteuertes Wegeventil verbindbar ist.

Durch diese Maßnahme kann mit einem einzigen Ventil je nach Lage der Steuerkanten im Ventil ein wechselndes oder paralleles Entlüften der Spülkreise erreicht werden.

Die erfindungsgemäße hydraulische Stelleinheit wird vorzugsweise bei einem Getriebeaktuator für ein Mehrgang-Wechselgetriebe eingesetzt. Solche Getriebeaktuatoren sind herkömmlich nur schwer zu entlüften, da sie in aller Regel am Getriebe an unzugänglichen Stellen angeflanscht sind. Häufig ist zu diesem Zweck sogar ein Getriebeausbau notwendig. Durch die erfindungsgemäße hydraulische Stelleinheit ist der Getriebeaktuator in kurzer Zeit und mit geringem Arbeitsaufwand zu entlüften, ohne daß es notwendig ist, das Getriebe oder den Getriebeaktuator selbst auszubauen.

Es versteht sich, daß die vorstehend genannten und die nachstehend noch zu erläuternden Merkmale der Erfindung nicht nur in der jeweils angegebenen Kombination, sondern auch in anderer Kombination oder in Alleinstellung verwendbar sind, ohne den Rahmen der Erfindung zu verlassen.

Weitere Merkmale und Vorteile der Erfindung ergeben sich aus der nachfolgenden Beschreibung von bevorzugten Ausführungsbeispielen unter Bezugnahme auf die Zeichnung. Darin zeigen:
- Fig. 1: eine schematische Darstellung einer nicht zur Erfindung gehörenden hydraulischen Stelleinheit in zwei unterschiedlichen Schaltstellungen (Fig. 1a, 1b) sowie in Entlüftungsstellung (Fig. 1c);
- Fig. 2: eine Ausführungsform einer erfindungsgemäßen hydraulischen Stelleinheit mit einer doppelt wirkenden Kolben/Zylinderanordnung und einer einfach wirkenden Kolben/Zylinderanordnung;
- Fig. 3: eine Seitenansicht eines mit der hydraulischen Stelleinheit von Fig. 2 ausgestatteten Getriebeaktuators;
- Fig. 4: einen Längsschnitt der doppelt wirkenden Kolben/Zylinderanordnung des Getriebeaktuators von Fig. 3;
- Fig. 5: einen Längsschnitt eines Druckventils des Getriebeaktuators von Fig. 3;
- Fig. 6: eine zweite Ausführungsform einer hydraulischen Stelleinheit; und
- Fig. 7: eine dritte Ausführungsform einer hydraulischen Stelleinheit.

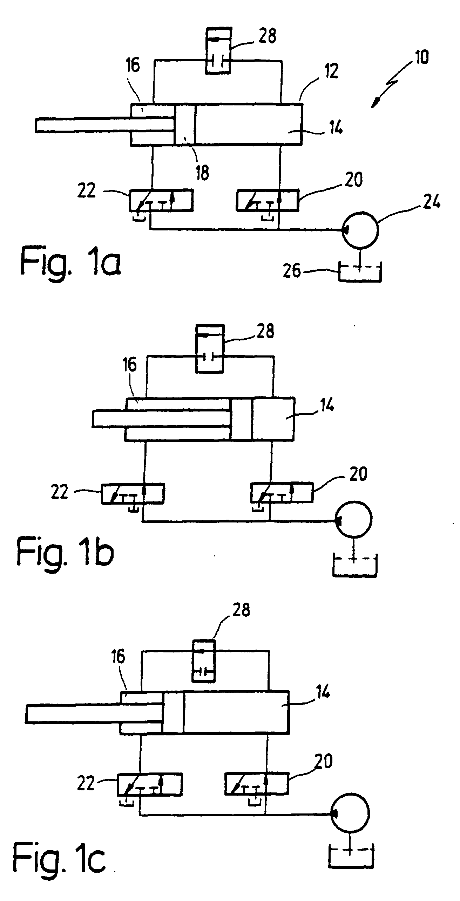

In Fig. 1 ist eine erste Ausführungsform einer nicht zur Erfindung gehörenden hydraulischen Stelleinheit generell mit der Bezugsziffer 10 bezeichnet.

Die hydraulische Stelleinheit 10 weist eine doppelt wirkende Kolben/Zylinderanordnung 12 mit einer ersten Kammer 14 und einer zweiten Kammer 16 auf, die zu beiden Seiten eines Kolbens 18 der Kolben/Zylinderanordnung 12 vorgesehen sind.

Die Kammern 14, 16 sind über ein erstes Schaltventil 20 bzw. ein zweites Schaltventil 22 mit einer Pumpe 24 verbunden, die aus einem Hydraulikfluidbehälter 26 versorgt wird.

Die Schaltventile 20, 22 sind als Wegeventile mit zwei Stellungen ausgebildet, wobei in der Durchflußstellung die jeweilige Kammer mit der Pumpe 24 verbunden ist, wie das Schaltventil 20 in Fig. 1a. In der Sperrstellung (Schaltventil 22 in Fig. 1a) ist die jeweilige Kammer mit dem Hydraulikfluidbehälter 26 verbunden, so daß in dieser Kammer vorhandenes Hydraulikfluid ungehindert in den Hydraulikfluidbehälter 26 zurückfließen kann.

Die zwei Kammern 14, 16 sind bei der hydraulischen Stelleinheit 10 über ein drittes Schaltventil 28 verbunden. Das Schaltventil 28 ist ebenfalls als Wegeventil ausgebildet, mit einer Sperrstellung und einer Durchflußstellung.

Während des normalen Betriebs der Kolben/Zylinderanordnung 12 werden die zwei Schaltventile 20, 22 z.B. mittels nicht dargestellter Elektromagnetansteuerung so geschaltet, daß der Kolben 18 entweder zur einen Seite (in Fig. 1a nach links) oder zur anderen Seite (in Fig. 1b nach rechts) gedrückt wird.

Zum Entlüften der hydraulischen Stelleinheit 10 wird das dritte Schaltventil 28 auf Durchlaß geschaltet und die Schaltventile 20, 22 werden so geschaltet, daß die Pumpe 24 Hydraulikfluid aus dem Hydraulikfluidbehälter 26 und durch das erste Schaltventil 20 in die erste Kammer 14 und von dort über das dritte Schaltventil 28 in die zweite Kammer 16 und durch das zweite Schaltventil 22 zurück in den Hydraulikfluidbehälter 26 spült. Durch das dritte Schaltventil 28 wird die stoffliche Trennung der Kammern 14, 16 aufgehoben. In den Kammern 14, 16 vorhandenes Hydraulikfluid, in welchem möglicherweise Luft dispergiert ist, wird zurück in den Hydraulikfluidbehälter 26 gefördert. Gleichzeitig werden die Kammern 14, 16 mit Hydraulikfluid aus dem Hydraulikfluidbehälter 26 gefüllt. Dabei ist zu vermeiden, daß im Hydraulikfluidbehälter gesammelte Luft durch die Pumpe angesaugt wird.

Es versteht sich, daß der mit Bezug auf Fig. lc beschriebene Spülkreis auch in anderer Richtung durchströmt werden kann, wenn die Schaltventile 20, 22 in ihre jeweilige andere Stellung versetzt werden.

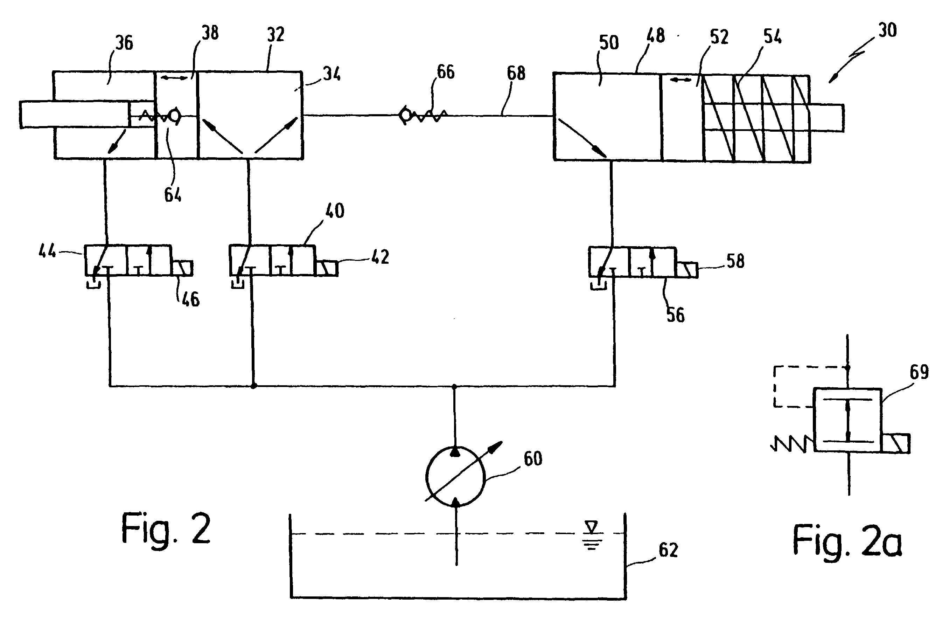

In Fig. 2 ist eine Ausführungsform einer erfindungsgemäßen hydraulischen Stelleinheit generell mit der Bezugsziffer 30 bezeichnet.

Die hydraulische Stelleinheit 30 weist eine doppelt wirkende Kolben/Zylinderanordnung 32 mit einer ersten Kammer 34 und einer zweiten Kammer 36 auf, die zu beiden Seiten eines Kolbens 38 vorgesehen sind.

Der ersten Kammer 34 ist ein erstes, federvorgespanntes Schaltventil 40 mit einem Elektromagnet 42 zur Ansteuerung desselben zugeordnet. Der zweiten Kammer 36 ist ein zweites, federvorgespanntes Schaltventil 44 mit einem Elektromagneten 46 zur Ansteuerung desselben zugeordnet.

Die hydraulische Stelleinheit 30 weist weiterhin eine einfach wirkende Kolben/Zylinderanordnung 48 auf, in der eine dritte Kammer 50 auf einer Seite eines Kolbens 52 vorgesehen ist, der durch eine Feder 54 vorgespannt ist. Der dritten Kammer 50 ist ein drittes, federvorgespanntes Schaltventil 56 mit einem Elektromagneten 58 zur Ansteuerung desselben zugeordnet.

Die Funktionsweise der Schaltventile 40, 44, 56 entspricht jener der Schaltventile 20, 22 der ersten Ausführungsform der Fig. 1.

Die drei Schaltventile 40, 44, 56 sind über eine Quelle (Pumpe) 60 mit einem Hydraulikfluidbehälter 62 verbunden. Das Verdrängungsvolumen der Pumpe 60 ist einstellbar, um den Hydraulikdruck zwischen einem Arbeitsdruck und einem Schaltdruck umschalten zu können.

Ein erstes, als Druckventil ausgebildetes Schaltventil 64 ist im Kolben 38 der doppelt wirkenden Kolben/Zylinderanordnung 32 vorgesehen und verbindet die zwei Kammern 34, 36. Ein zweites als Druckventil ausgebildetes Schaltventil 66 verbindet über eine Leitung 68 die erste Kammer 34 mit der dritten Kammer 50.

Die Druckventile 64, 66 sind Sperrventile und parallel geschaltet, so daß bei Anlegen eines Schaltdruckes Hydraulikfluid von der ersten Kammer 34 in die zweite Kammer 36 und von der ersten Kammer 34 in die dritte Kammer 50 strömen kann, jedoch nicht umgekehrt.

Zum Entlüften der ersten Kammer 34 und der zweiten Kammer 36 wird ein den normalen Arbeitsdruck der hydraulischen Stelleinheit 30 übersteigender Schaltdruck zur Ansteuerung der Druckventile 64, 66 an die erste Kammer 34 und die dritte Kammer 50 angelegt, indem die Schaltventile 40, 56 diese Kammern mit der Pumpe 60 verbinden. Gleichzeitig wird das zweite Schaltventil 44 so geschaltet, daß die zweite Kammer 36 mit dem Hydraulikfluidbehälter 62 verbunden wird. Durch den erhöhten Schaltdruck öffnet das Druckventil 64, so daß die zwei Kammern 34, 36 gespült und damit entlüftet werden. Da der Druck in den Kammern 34 und 50 gleich hoch ist, öffnet das Druckventil 66 nicht.

Zum Entlüften der ersten Kammer 34 und der dritten Kammer 50 werden die erste und die zweite Kammer 34, 36 über die Schaltventile 40, 44 mit der Pumpe 60 verbunden und das dritte Schaltventil 56 wird so geschaltet, daß die dritte Kammer 50 mit dem Hydraulikfluidbehälter 62 verbunden ist. Hierdurch öffnet das zweite Druckventil 66 während das erste Druckventil 64 gesperrt bleibt.

Durch den Aufbau eines Gegendruckes in der jeweils nicht zu entlüftenden Kammer wird eine gezielte Entlüftung ermöglicht.

Fig. 2a zeigt ein schaltbares Druckregelventil 69, das bei der Ausführungsform von Fig. 2 anstelle des Schaltventils 40 eingesetzt werden kann. Das schaltbare Druckregelventil 69 kann den Hydraulikdruck umschaltbar auf zwei verschiedene Werte regeln, also z.B. den Arbeitsdruck und den Schaltdruck. Daher kann bei Verwendung des Druckregelventils 69 auf eine Einstellbarkeit der Pumpe 60 verzichtet werden.

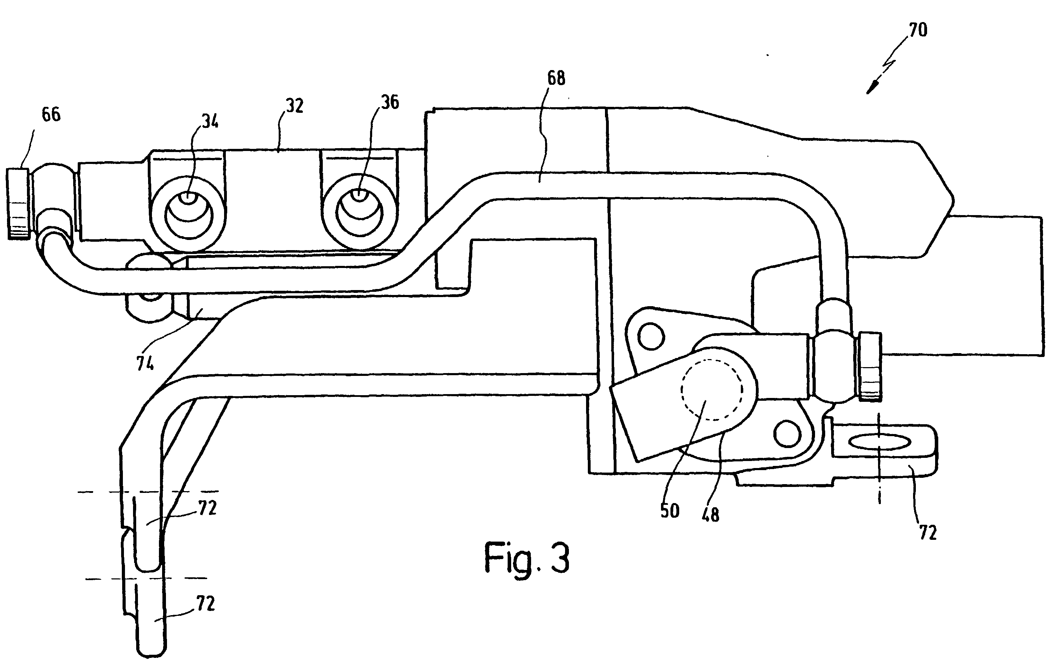

In Fig. 3 ist ein Getriebeaktuator 70 gezeigt, der mit der hydraulischen Stelleinheit 30 von Fig. 2 ausgerüstet ist.

Der Getriebeaktuator 70 ist über Flansche 72 an einem nicht dargestellten Getriebe befestigt. Eine Schaltwelle 74 erstreckt sich aus dem Getriebeaktuator und ist mit einer Schaltwelle des Getriebes verbindbar.

Die doppelt wirkende Kolben/Zylinderanordnung 32 ist parallel zu der Schaltwelle 74 ausgerichtet und mit dieser über nicht dargestellte Verbindungsmittel gekoppelt. Durch Schalten der in Fig. 3 nicht dargestellten Schaltventile 40, 44 können die zwei Kammern 34, 36 der Kolben/Zylinderanordnung 32 wahlweise mit der Pumpe verbunden werden, um die Schaltwelle 74 in Längsrichtung hin- und herzubewegen.

Die einfach wirkende Kolben/Zylinderanordnung 48 ist quer zu der Schaltwelle 74 ausgerichtet und ermöglicht über nicht dargestellte Kopplungsmittel, die Schaltwelle 74 zu drehen.

Durch die Kombination von Längs- und Drehbewegungen der Schaltwelle 74 können die Gänge des mit dem Getriebeaktuator 70 versehenen Getriebes geschaltet werden.

Die doppelt wirkende Kolben/Zylinderanordnung 32 und die einfach wirkende Kolben/Zylinderanordnung 48 sind über die Leitung 68 verbunden, in die das zweite Druckventil 66 geschaltet ist.

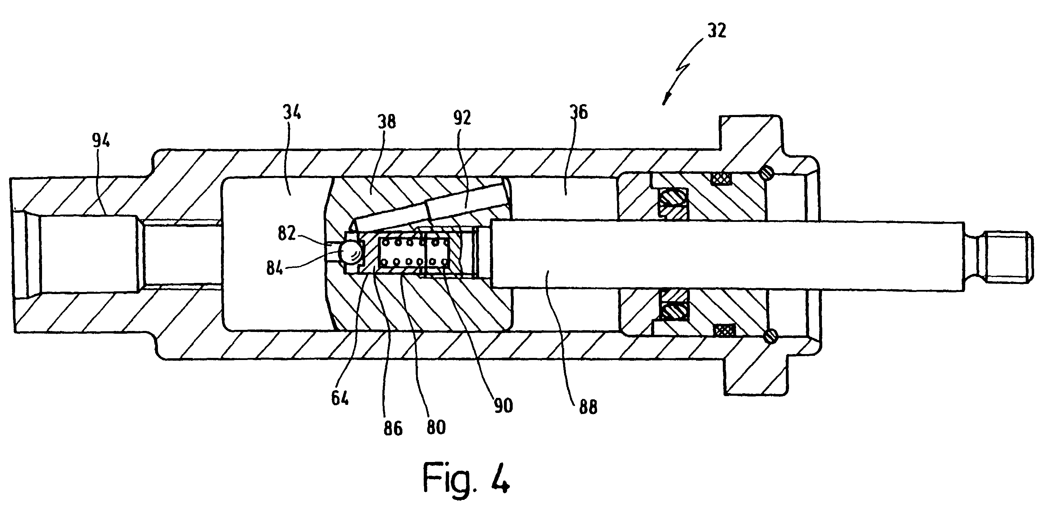

Fig. 4 zeigt einen Längsschnitt der doppelt wirkenden Kolben/Zylinderanordnung 32.

Der Kolben 38 ist mit einer Längsbohrung 80 versehen, die zur ersten Kammer 34 hin eine Öffnung 82 ausbildet. Im Inneren der Längsbohrung 80 ist eine Kugel 84 zwischen der Öffnung 82 und einem in der Bohrung 80 längsverschieblichen Schieber 86 gelagert. Zwischen dem Schieber 86 und einer in das der Öffnung 82 entgegengesetzte Ende der Bohrung 80 geschraubten Kolbenstange 88 ist eine Feder 90 vorgesehen, durch welche die Kugel 84 die Öffnung 82 mit einer vorbestimmten, dem Schaltdruck entsprechenden Kraft verschließt. Eine Bohrung 92 verbindet die zweite Kammer 36 mit dem die Kugel 84 umgebenden Raum, so daß die zwei Kammern 34, 36 bei von der Öffnung 82 abgehobener Kugel 84 verbunden sind. Durch diese Anordnung wird das erste Druckventil 64 realisiert.

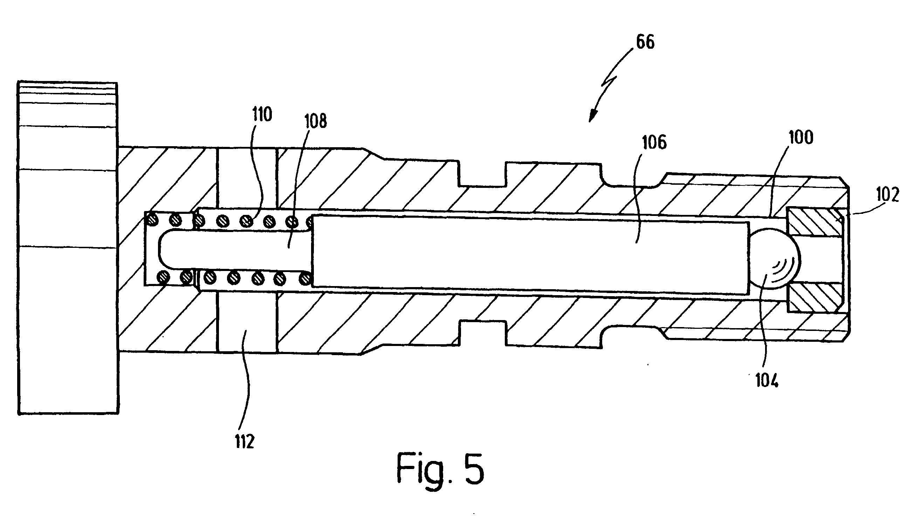

Die Kolben/Zylinderanordnung 32 weist weiterhin eine Anschlußbohrung 94 auf, durch die die erste Kammer 34 mit der Leitung 68 verbindbar ist. In die Anschlußbohrung 94 ist das zweite Druckventil 66 einschraubbar, dessen Längsschnitt in Fig. 5 dargestellt ist.

Das zweite Druckventil 66 weist generell die Form einer Schraube auf und ist mit einer Längsbohrung 100 versehen, deren Ende mit einem Abschlußrohrstück 102 verschlossen ist. Im Inneren der Längsbohrung 100 ist eine Kugel 104 zwischen dem Abschlußrohrstück 102 und einem Schieber 106 gelagert, der in der Längsbohrung 100 längsverschieblich gelagert ist. Zwischen einem zapfenartigen Ende 108 des Schiebers 106 und dem Boden der Längsbohrung 100 ist eine Feder 110 eingespannt, die die Kugel 104 gegen die Rohröffnung des Abschlußrohrstückes 102 drückt.

Wenn die Kugel 104 von dem Abschlußrohrstück 102 abgehoben wird, strömt Hydraulikfluid an dem Schieber 106 vorbei zu einer Querbohrung 112, an die die Leitung 68 über eine Muffe anschließbar ist.

Die Druckventile öffnen generell oberhalb einer bestimmten Druckschwelle (Schaltdruck). Die Druckventile müssen keiner zusätzlichen Justierung unterzogen werden. Zur Festlegung des Schaltdruckes sind die Einflüsse der Federn 90, 110 und der sonstigen mechanischen Bauteile zu berücksichtigen. Fertigungsbedingt zeigen unterschiedliche Druckventile unterschiedliche Schaltdrücke. Eine sichere Öffnung wird demgemäß bei einer hydrostatischen Druckdifferenz erreicht, die den fertigungsbedingten maximalen Schaltdruck übersteigt.

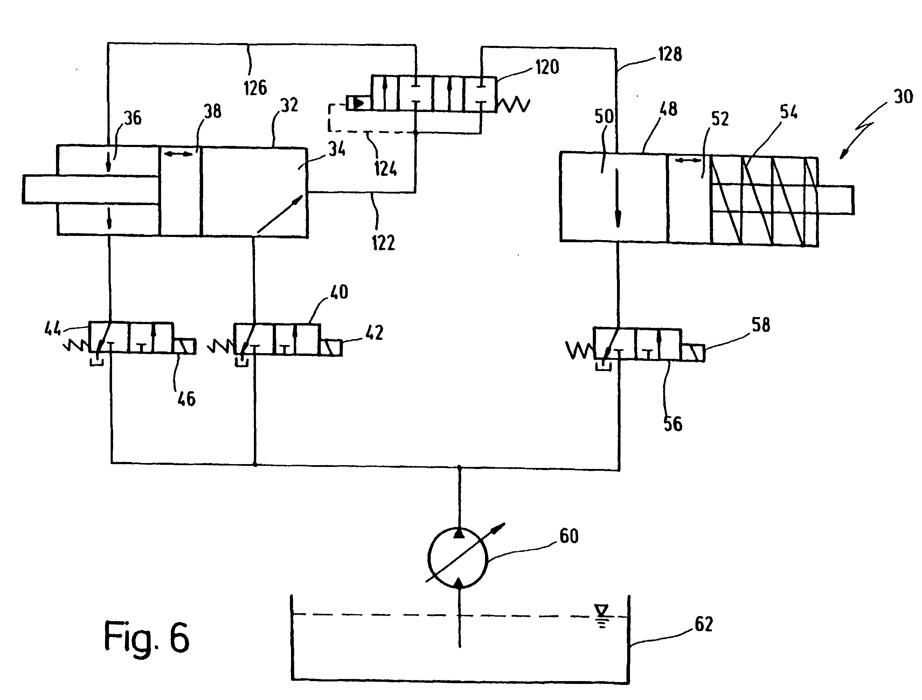

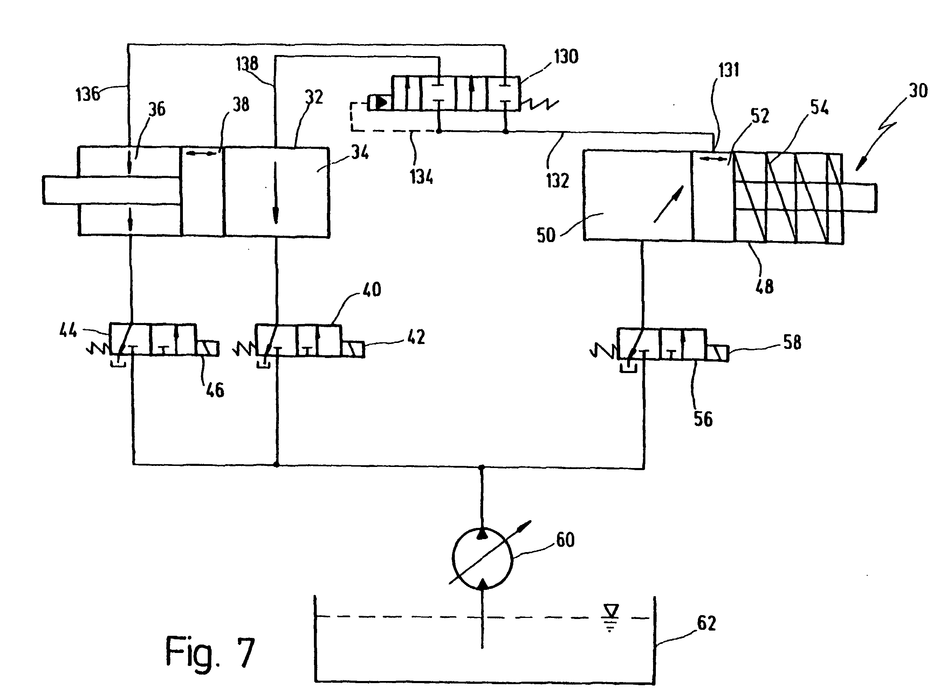

Die Fig. 6 und 7 zeigen eine zweite bzw. dritte Ausführungsform einer erfindungsgemäßen hydraulischen Stelleinheit, deren generelle Struktur der Ausführungsform von Fig. 2 ähnlich ist und die daher ebenfalls generell mit der Bezugsziffer 30 bezeichnet sind.

Die zweite, in Fig. 6 gezeigte Ausführungsform unterscheidet sich von der in Fig. 2 gezeigten Ausführungsform lediglich dadurch, daß anstelle der zwei als Sperrventile ausgebildeten Druckventile 64, 66 ein druckgesteuertes 4/4-Wegeventil 120 mit folgender Beschaltung vorgesehen ist. Die zwei Eingänge des Wegeventils 120 sind über eine Leitung 122 mit der ersten Kammer 32 verbunden. Von der Leitung 122 zweigt eine Steuerleitung 124 zur druckgesteuerten Betätigung des Wegeventils 120 gegen Federvorspannung ab. Die zwei Ausgänge des Wegeventils 120 sind über Leitungen 126 und 128 mit der zweiten Kammer 36 bzw. der dritten Kammer 50 verbunden. Unter Arbeitsdruck des Hydraulikfluides zur Betätigung der Stellglieder 38, 52 befindet sich das Wegeventil 120 durch die Federvorspannung in Ruhestellung. Bei Anlegen des Schaltdruckes wird die Leitung 122 mit den parallelen Leitungen 126 und 128 verbunden, so daß die drei Kammern 34, 36, 50 gleichzeitig parallel gespült werden können.

Die in Fig. 7 gezeigte dritte Ausführungsform weist ebenfalls ein druckgesteuertes 4/4-Wegeventil 130 auf, das identisch aufgebaut ist wie das Wegeventil 120 der dritten Ausführungsform.

Bei der dritten Ausführungsform ist in der einfach wirkenden Kolben/Zylinderanordnung 48 eine Steueröffnung 131 im Überschneidungsbereich zwischen Kolben 52 und Zylinder vorgesehen. Bei Anlegen des Arbeitsdruckes ist diese Steueröffnung 131 geschlossen. Bei Anlegen des Schaltdruckes wird der Kolben 52 gegen die Wirkung der Feder 54 weiter ausgelenkt und gibt die Steueröffnung 131 frei, so daß die Kammer 50 mit einer Leitung 132 verbunden wird, die an die zwei Eingänge des Wegeventils 130 angeschlossen ist. Von der Leitung 132 geht, ähnlich wie bei der zweiten Ausführungsform, eine Steuerleitung 134 zur druckgesteuerten Betätigung des Wegeventils 130 ab. Die Ausgänge des Wegeventils 130 sind über Leitungen 136 und 138 mit den Kammern 34 bzw. 36 verbunden.

Durch die serielle Verbindung der Steueröffnung 131 und des Wegeventils 130 wird eine erhöhte Sicherheit gegenüber einem ungewollten Öffnen des Spülkreises aufgrund von z.B. Druckspitzen im Arbeitsdruck erreicht.

Es versteht sich, daß auch bei der zweiten und dritten Ausführungsform anstelle des Schaltventils 40 das schaltbare Druckregelventil 69 von Fig. 2a eingesetzt werden kann. In diesem Fall kann anstelle einer einstellbaren Pumpe 60 eine Pumpe mit konstantem Verdrängungsvolumen verwendet werden.

Für ein gutes Funktionieren der Entlüftung sind der Auftrieb der Gase im Hydraulikfluidbehälter und das Luftabscheidungsvermögen des Hydraulikfluids von Bedeutung. Beide Vorgänge sind temperaturabhängig.

## Patentansprüche

1. Hydraulische Stelleinheit (30) mit wenigstens zwei Kammern (34, 36, 50), die zur Betätigung eines Stellgliedes (38, 52) mit einer aus einem Hydraulikfluidbehälter (62) versorgten Quelle (60) von unter Arbeitsdruck stehendem Hydraulikfluid durch jeweilige Schaltventile (40, 44, 56; 69, 44, 56) verbindbar sind, wobei die Kammern (34, 36, 50) über eine schaltbare Ventilanordnung (64, 66; 120; 130) miteinander verbunden sind, derart, daß bei auf Durchfluß geschalteter Ventilanordnung (64, 66; 120; 130) ein geschlossener Spülkreis ausgehend von dem Hydraulikfluidbehälter (62) über die Hydraulikfluidquelle (60), die Schaltventile (40, 44, 56; 69, 44, 56), die Kammern (34, 36, 50) und die Ventilanordnung (64, 66; 120; 130) zurück zu dem Hydraulikfluidbehälter (62) gebildet ist, **dadurch gekennzeichnet, daß** die schaltbare Ventilanordnung (64, 66) wenigstens ein Druckventil (64, 66; 120; 130) aufweist, dessen Schaltdruck höher ist als der Arbeitsdruck des Hydraulikfluides zur Betätigung des Stellgliedes (38, 52).

2. Hydraulische Stelleinheit nach Anspruch 1, **dadurch gekennzeichnet, daß** das Druckventil ein Sperrventil (64, 66) ist.

3. Hydraulische Stelleinheit nach Anspruch 1 oder 2, **dadurch gekennzeichnet, daß** die Kammern (34, 36) zwei Kammern einer doppelt wirkenden Kolben/Zylinderanordnung (32) umfassen und daß die schaltbare Ventilanordnung (64) im Kolben (38) der Kolben/Zylinderanordnung (32) angeordnet ist.

4. Hydraulische Stelleinheit nach Anspruch 1, **dadurch gekennzeichnet, daß** das Druckventil ein druckgesteuertes Wegeventil (120; 130) ist.

5. Hydraulische Stelleinheit nach einem der Ansprüche 1 bis 4, **dadurch gekennzeichnet, daß** die schaltbare Ventilanordnung (130) eine Steueröffnung (131) in einer Kolben/Zylinderanordnung (48) aufweist, wobei die Steueröffnung (131) bei Arbeitsdruck des Hydraulikfluides im Überschneidungsbereich zwischen Kolben (52) und Zylinder der Anordnung (48) angeordnet ist und bei Schaltdruck des Hydraulikfluides mit einer Kammer (50) der Anordnung (48) in Verbindung steht.

6. Hydraulische Stelleinheit nach Anspruch 5, **dadurch gekennzeichnet, daß** die Kolben/Zylinderanordnung (48) eine einfach wirkende Kolben/Zylinderanordnung (48) ist.

7. Hydraulische Stelleinheit nach einem der Ansprüche 1 bis 6, **dadurch gekennzeichnet, daß** die hydraulische Stelleinheit drei oder mehr Kammern (34, 36, 50) mit jeweiligen, diesen zugeordneten Schaltventilen (40, 44, 56) aufweist, von denen eine zentrale Kammer (34; 50) mit den anderen Kammern (36, 50; 34, 36) über eine jeweilige schaltbare Ventilanordnung (64, 66; 120; 130) so verbunden ist, daß parallele Spülkreise gebildet werden.

8. Verfahren zum Entlüften einer hydraulischen Stelleinheit (30) mit wenigstens zwei Kammern (34, 36, 50), die zur Betätigung eines jeweiligen Stellgliedes (38, 52) mit einer aus einem Hydraulikfluidbehälter (62) versorgten Quelle (60) von unter Arbeitsdruck stehendem Hydraulikfluid durch jeweilige Schaltventile (40, 44, 56; 69, 44, 56) verbindbar sind, wobei die Kammern (34, 36, 50) zur Entlüftung miteinander verbunden werden und das Hydraulikfluid anschließend von der Hydraulikfluidquelle (60) durch die Kammern (34, 36, 50) zurück in den Hydraulikfluidbehälter (62) gespült wird, **dadurch gekennzeichnet, daß** die Kammern (34, 36, 50) durch wenigstens ein Druckventil (64, 66; 120; 130) miteinander verbunden sind, dessen Schaltdruck höher ist als der Arbeitsdruck des Hydraulikfluides zur Betätigung des Stellgliedes (38, 52), und daß der Hydraulikdruck zum Schalten des Druckventils (64, 66) auf den Schaltdruck angehoben wird, um einen Spülvorgang einzuleiten.

9. Verfahren nach Anspruch 8, **dadurch gekennzeichnet, daß** von den Kammern (34, 36, 50) eine zentrale Kammer (34; 50) mit den anderen Kammern (36, 50; 34, 36) über eine jeweilige schaltbare Ventilanordnung (64, 66; 120; 130) verbindbar ist, und wobei zur Entlüftung der zentralen Kammer (34; 50) und einer der anderen Kammern (36, 50; 34, 36) die jeweilige Ventilanordnung (64, 66; 120; 130) auf Durchlaß geschaltet wird.

10. Verfahren nach Anspruch 9, **dadurch gekennzeichnet, daß** die schaltbaren Ventilanordnungen (64, 66) durch parallele Druckventile (64, 66) gebildet ist, deren Schaltdruck höher ist als der Arbeitsdruck des Hydraulikfluides zur Betätigung der jeweiligen Stellglieder (38, 52), und daß zur Entlüftung der zentralen Kammer (34) und einer (z.B. 36) der anderen Kammern (36, 50) die verbleibenden Kammern (z.B. 50) parallel zu der zentralen Kammer (34) mit Hydraulikfluid unter Schaltdruck versorgt werden.

11. Hydraulische Stelleinheit nach Anspruch 9, **dadurch gekennzeichnet, daß** die zentrale Kammer (50) mit den anderen Kammern (34, 36) über ein druckgesteuertes Wegeventil (120; 130) verbindbar ist.

12. Getriebeaktuator (70) für ein Mehrgang-Wechselgetriebe, mit einer hydraulischen Stelleinheit (30), die ein eine Getriebeschaltwelle (74) in einer ersten Bewegungsrichtung hin- und herbewegendes erstes Stellglied (38) und ein die Getriebeschaltwelle (74) in einer zweiten, generell quer zur ersten Bewegungsrichtung hin- und herbewegendes zweites Stellglied (52) aufweist,
**dadurch gekennzeichnet, daß** die hydraulische Stelleinheit eine hydraulische Stelleinheit (30) gemäß einem der Ansprüche 1 bis 7 ist.

## Claims

1. A hydraulic actuator unit (30) comprising at least two chambers (34, 36, 50) which, for actuating an actuator (38, 52), can be connected by means of respective switching valves (40, 44, 56; 69, 44, 56) with a source (60) of hydraulic fluid under operating pressure, said source (60) being supplied from a hydraulic fluid container (62), wherein said chambers (34, 36, 50) are connected to each other via a switchable valve arrangement (64, 66; 120; 130) such that, if said valve arrangement (64, 66; 120; 130) is switched to a flow-through mode, a closed flushing circuit originating at said hydraulic fluid container (62) and via said hydraulic fluid source (60), said switching valves (40, 44, 56; 69, 44, 56), said chambers (34, 36, 50), and said valve arrangement (64, 66; 120; 130) back to said hydraulic fluid container (62), is formed,
**characterized in that** said switchable valve arrangement (64, 66) comprises at least one pressure valve (64, 66; 120; 130), the switching pressure of said pressure valve being higher than said operating pressure of said hydraulic fluid for actuating said actuator (38, 52).

2. The hydraulic actuator unit of claim 1, **characterized in that** said pressure valve is a stop valve (64, 66).

3. The hydraulic actuator unit of claim 1 or 2, **characterized in that** said chambers (34, 36) comprise two chambers of a double-acting piston cylinder arrangement (32), and that said switchable valve arrangement (64) is arranged within the piston (38) of said piston cylinder arrangement (32).

4. The hydraulic actuator unit of claim 1, **characterized in that** said pressure valve is a pressure-controlled gate valve (120; 130).

5. The hydraulic actuator unit of any of claims 1 to 4, **characterized in that** said switchable valve arrangement (130) comprises a control port (131) in a piston cylinder arrangement (48), wherein said control port (131), at the operating pressure of said hydraulic fluid, is located at the intersection area between piston (52) and cylinder of said arrangement (48), and is, at the switching pressure of said hydraulic fluid, connected with a chamber (50) of said arrangement (48).

6. The hydraulic actuator unit of claim 5, **characterized in that** said piston cylinder arrangement (48) is a single-acting piston cylinder arrangement (48).

7. The hydraulic actuator unit of any of claims 1 to 6, **characterized in that** said hydraulic actuator comprises three or more chambers (34, 36, 50) with respective associated switching valves (40, 44, 56), wherein a central chamber (34; 50) of said three or more chambers (34, 36, 50) is connected with the other chambers (36, 50; 34, 36) via a respective switchable valve arrangement (64, 66; 120; 130) such that parallel flushing circuits are formed.

8. A method for degassing a hydraulic actuator (30) having at least two chambers (34, 36, 50) which, for actuating a respective actuator (38, 52) can be connected via respective switching valves (40, 44, 56; 69, 44, 56) with a source (60) of hydraulic fluid under operating pressure, said source (60) being supplied from a hydraulic fluid container (62), wherein, for degassing purposes, said chambers (34, 36, 50) are connected to each other, and said hydraulic fluid is subsequently flushed from said hydraulic fluid source (60) through said chambers (34, 36, 50) back into said hydraulic fluid container (62), **characterized in that** said chambers (34, 36, 50) are connected to each other via at least one pressure valve (64, 66; 120; 130), the switching pressure of said pressure valve (64, 66; 120; 130) being higher than said operating pressure of said hydraulic fluid for actuating said actuator (38, 52), and that said hydraulic pressure, for switching said pressure valve (64, 66), is increased to the switching pressure, in order to initiate a flushing process.

9. The method of claim 8, **characterized in that** a central chamber (34; 50) of said chambers (34, 36, 50) can be connected with the other chambers (36, 50; 34, 36) via a respective switchable valve arrangement (64, 66; 120; 130), and wherein, for degassing the central chamber (34; 50) and one of said other chambers (36, 50; 34, 36), the respective valve arrangement (64, 66; 120; 130) is switched to the open state.

10. The method of claim 9, **characterized in that** said switchable valve arrangements (64, 66) are formed by means of parallel pressure valves (64, 66), the switching pressure of said pressure valves (64, 66) being higher than said operating pressure of said hydraulic fluid for actuating the respective actuators (38, 52), and that, for degassing the central chamber (34) and one (e.g. 36) of the other chambers (36, 50), the remaining chambers (e.g. 50) are provided in parallel to said central chamber (34) with hydraulic fluid under switching pressure.

11. The hydraulic actuator of claim 9, **characterized in that** said central chamber (50) can be connected with the other chambers (34, 36) via a pressure-controlled gate valve (120; 130).

12. A transmission actuator (70) for a multi-gear shift transmission, comprising a hydraulic actuator (30), said hydraulic actuator (30) comprising a first actuator member (38) reciprocatingly moving a transmission gearshift rod (74) in a first moving direction, and a second actuator member (52) for reciprocatingly moving said transmission gearshift rod (74) in a second moving direction which is arranged generally transverse to said first moving direction,
**characterized in that** said hydraulic actuator comprises a hydraulic actuator (30) according to any of claims 1 to 7.

## Revendications

1. Dispositif de commande hydraulique (30) comportant au moins deux chambres (34, 36, 50) aptes à être respectivement reliées par des soupapes de commande (40, 44, 56 ; 69, 44, 56) à une source (60) de fluide hydraulique à la pression de service, alimentée par un réservoir de fluide hydraulique (62), en vue d'actionner un vérin (38, 52), les chambres (34, 36, 50) étant reliées entre elles par un agencement de soupapes commutable (64, 66 ; 120 ; 130) de manière à ce que, lorsque l'agencement de soupapes (64, 66 ; 120 ; 130) est commuté en mode d'ouverture, il se forme un circuit de rinçage fermé partant du réservoir de fluide hydraulique (62) et y aboutissant en passant par la source de fluide hydraulique (60), les soupapes de commande (40, 44, 56 ; 69, 44, 56), les chambres (34, 36, 50) et l'agencement de soupapes (64, 66 ; 120 ; 130), **caractérisé en ce que** l'agencement de soupapes commutable (64, 66) comporte au moins une valve à pression (64, 66 ; 120 ; 130) dont la pression de déclenchement est supérieure à la pression de service du fluide hydraulique permettant d'actionner le vérin (38, 52).

2. Dispositif de commande hydraulique selon la revendication 1, **caractérisé en ce que** la valve à pression est une valve d'arrêt (64, 66).

3. Dispositif de commande hydraulique selon la revendication 1 ou 2, **caractérisé en ce que** les chambres (34, 36) comportent deux chambres d'un ensemble piston/cylindre (32) à double effet et **en ce que** l'agencement de soupapes commutable (64) est logé dans le piston (38) de l'ensemble piston/cylindre (32).

4. Dispositif de commande hydraulique selon la revendication 1, **caractérisé en ce que** la valve à pression est un distributeur (120 ; 130) commandé par pression.

5. Dispositif de commande hydraulique selon l'une des revendications 1 à 4, **caractérisé en ce que** l'agencement de soupapes commutable (130) comporte une ouverture de commande (131) dans un ensemble piston/cylindre (48), ladite ouverture de commande (131) étant située au niveau de la zone de recouvrement entre le piston (52) et le cylindre de l'ensemble (48) lorsque le fluide hydraulique est à la pression de service et étant reliée à une chambre (50) de l'ensemble (48) lorsque le fluide hydraulique est à la pression de déclenchement.

6. Dispositif de commande hydraulique selon la revendication 5, **caractérisé en ce que** l'ensemble piston/cylindre (48) est un ensemble piston/cylindre (48) à simple effet.

7. Dispositif de commande hydraulique selon l'une des revendications 1 à 6, **caractérisé en ce que** le dispositif de commande hydraulique comprend trois chambres (34, 36, 50) ou plus, dotées chacune de soupapes de commande (40, 44, 56) qui leur sont respectivement associées, une chambre centrale (34 ; 50) parmi lesdites chambres étant reliée aux autres chambres (36, 50 ; 34, 36) par l'agencement de soupapes commutable (64, 66 ; 120 ; 130) qui lui est associé, de manière à former des circuits de rinçage parallèles.

8. Procédé de purge d'un dispositif de commande hydraulique (30) comportant au moins deux chambres (34, 36, 50) aptes à être respectivement reliées par des soupapes de commande (40, 44, 56 ; 69, 44, 56) à une source (60) de fluide hydraulique à la pression de service, alimentée par un réservoir de fluide hydraulique (62), en vue d'actionner un vérin associé (38, 52), les chambres (34, 36, 50) étant reliées entre elles pour la purge et le fluide hydraulique étant ensuite refoulé depuis la source de fluide hydraulique (60) à travers les chambres (34, 36, 50) et de retour dans le réservoir de fluide hydraulique (62), **caractérisé en ce que** les chambres (34, 36, 50) sont reliées entre elles par au moins une valve à pression (64, 66 ; 120 ; 130), dont la pression de déclenchement est supérieure à la pression de service du fluide hydraulique permettant d'actionner le vérin (38, 52), et **en ce que** la pression hydraulique est augmentée au niveau de la pression de déclenchement pour déclencher la valve à pression (64, 66) et lancer une opération de rinçage.

9. Procédé selon la revendication 8, **caractérisé en ce que**, parmi les chambres (34, 36, 50), une chambre centrale (34 ; 50) peut être reliée aux autres chambres (36, 50 ; 34, 36) par un agencement de soupapes associé (64, 66 ; 120 ; 130), et **en ce que** pour purger la chambre centrale (34 ; 50) et une des autres chambres (36, 50 ; 34, 36), l'agencement de soupapes associé (64, 66 ; 120 ; 130) est commuté en mode d'ouverture.

10. Procédé selon la revendication 9,
**caractérisé en ce que** l'agencement de soupapes commutable (64, 66) est formé par des valves à pression parallèles (64, 66), dont la pression de déclenchement est supérieure à la pression de service du fluide hydraulique permettant d'actionner les vérins respectifs (38, 52) et **en ce que** pour purger la chambre centrale (34) et une des autres chambres (36, 50), par exemple la chambre (36), les autres chambres (par exemple la chambre 50) sont alimentées en fluide hydraulique à la pression de déclenchement en parallèle avec la chambre centrale (34).

11. Dispositif de commande hydraulique selon la revendication 9, **caractérisé en ce que** la chambre centrale (50) peut être reliée aux autres chambres (34, 36) par un distributeur commandé par pression (120 ; 130).

12. Actionneur de boîte de vitesses (70) pour boîte de vitesses à plusieurs rapports, avec un dispositif de commande hydraulique (30) qui comporte un premier vérin (38) déplaçant, dans un sens et dans l'autre et dans une première direction, un axe de commande de vitesse (74) et un second vérin (52) déplaçant ledit axe de commande de vitesses (74) dans un sens et dans l'autre dans une seconde direction sensiblement transversale à la première, **caractérisé en ce que** le dispositif de commande hydraulique est un dispositif de commande hydraulique (30) selon l'une des revendications 1 à 7.
